# EUROPEAN PATENT APPLICATION

(11) **EP 1 589 740 A1**
(43) Date of publication of application: **26.10.2005**
(21) Application number: 04701338.8
(22) Date of filing: 12.01.2004
(51) Int. Cl.: H04M 17/00, H04L 12/14

(54) **METHOD OF THE THIRD PARTY PAYING FOR THE MULTIMEDIA MESSAGE SENT BY SENDER**

(30) Priority: 10.01.2003 CN 03101151
(71) Applicant: Huawei Technologies Co., Ltd., Longgang District, Shenzehen, Guangdong 518129 (CN)
(72) Inventor: LI, Zhiming, Huawei Administration Building, Guangdong, 518129 (CN)
(74) Representative: Mounteney, Simon James
(86) International application number: PCT/CN2004/000033
(87) International publication number: WO 2004/064367

(57) **Abstract**

The present invention discloses a method for a third party paying for the multimedia message transmission from a sending party. The third party signs a third party paying contract with a service provider or the sending party, the service provider sets an account for the third party in the billing system and stores the third party paying rules and relevant information. The sending party transmits a multimedia message to the MMS Relay/Sever thereof, the MMS Relay/Sever thereof acquires the third party paying rules and relevant information. If the multimedia message transmission from the sending party is to be paid by the third party, the MMS Relay/Sever of the sending party, after sending the MM to the receiving party, notifies the billing system of the service provider that this MM transmission is to be paid by third party, the billing system of the service provider then deducts relevant cost from the account of the third party. With the method of the present invention, a third party can pay for an MM transmission from a sending party, and the sending party can be notified that this MM transmission is free.

## Description

### Field of Technology

The present invention relates to paying for a service in a mobile communication system, more particularly to a method of a third party paying for multimedia message transmission from a sending party.

### Background of the Invention

Based on the second generation message service, the third generation mobile communication system has introduced Multimedia Message Service (MMS). The MMS makes user terminals able to send and receive multimedia messages of various media, such as image, voice, text and animation, so as to implement information transmission between mobile phones and between a mobile phone and Internet.

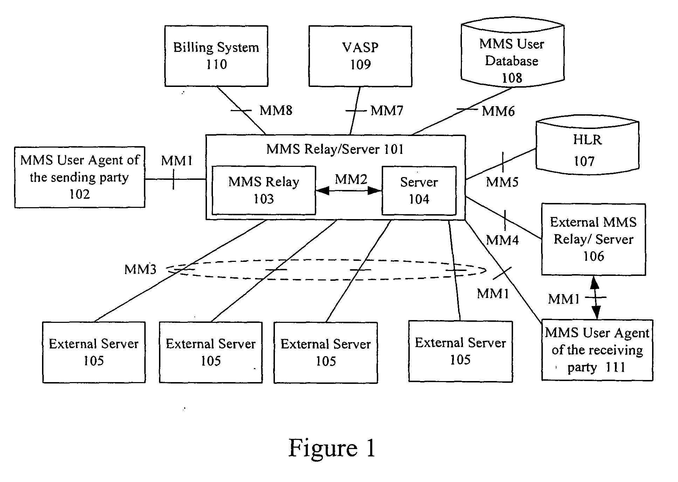

The 3rd Generation Partnership Project (3GPP) has defined a service demand and a basic implementing architecture for MMS. The network architecture of MMS according to the standard for MMS Phase 2 of 3GPP (TS23.140) is as shown in Figure 1, in which the interface between a MMS Relay/Server 101 and a MMS User Agent for a sending party 102 is interface MM1; the interface between a MMS Relay 103 and a MMS Server 104 is interface MM2; the interface between the MMS Relay/Server 101 and an external server 105, which can be a server for sending E-Mail, fax, Unified Messaging Service (UMS) and so on, is interface MM3; the interface between the MMS Relay/Server 101 and a MMS Relay/Server 106 in a different Multimedia Message Service Environment (MMSE) is interface MM4; the interface between the MMS Relay/Server 101 and a Home Location Register (HLR) 107 is interface MM5; the interface between the MMS Relay/Server 101 and a MMS User Database 108 is interface MM6; the interface between the MMS Relay/Server 101 and a Value Added Service Provider (VASP) 109 is interface MM7; and the interface between the MMS Relay/Server 101 and a Billing System 110 is interface MM8.

If the user wants to send a Multimedia Message (MM), first, the MM is edited by the MMS User Agent of a sending party 102, then the edited message is submitted or uploaded to the MMS Relay/Server 101 via interface MM1; the MMS Relay/Server 101 makes an inquiry at the HLR 107, via interface MM5, for the address of the MMS Relay/Server where the receiving party is located and starts different procedures depending on whether the receiving party is a mobile phone user or an external server. When the receiving party is a mobile phone, if the receiving party and the sending party are located in MMS Relay/Servers of different MMSEs, this MM will be transmitted to the MMS Relay/Server 106 where the receiving party is located, which will then transmit the MM to the MMS User Agent of the receiving party 111 via interface MM1; if the receiving party and the sending party are located in the MMS Relay/Server of the same MMSE, this MM will be transmitted to the MMS User Agent of the receiving party 111 directly by this MMS Relay/Server via interface MM1. When the receiving party is an external server, this MM will be transmitted to the external server 105 by the MMS Relay/Server where the receiving party is located via interface MM3, and then the MM edited by the user at the sending end is displayed to the user at the receiving end by the External Server 105.

If VASP acts as the sending party or the receiving party, since the interface between the VASP and the MMS Relay/Server is MM7, the interface MM1 mentioned in the above procedures corresponding to the receiving party is to be replaced by interface MM7.

It is proposed in the standard for MMS Function Description Phase 1 (TS22.140) that a third party who has contracted with a VASP, a service provider or a receiving party can pay for the receiving party for the received MM. It is not proposed, however, how this third party pays for the sending party for the MM transmission.

### Summary of the Invention

In view of the above, a main object of the present invention is to provide a method of a third party paying for multimedia message transmission from the sending party so as to allow the third party to pay for the sending party for the MM transmission while allowing the sending party to know that the MM transmission is free.

According to the present invention, a method for a third party paying for MM transmission from a sending party comprises:
a. a MMS network setting and storing the third party paying rules and information according to paying type of the third party, and setting an account for the third party in a billing system;
b. a sending party transmitting an MM to a MMS Relay/Sever of the sending party by means of a submit request message, the MMS Relay/Sever of the sending party acquiring the third party paying rules and information and judging whether this MM transmission from the sending party is to be paid by the third party according to the rules, if not, ending the procedure of the third party paying for the MM transmission from the sending party, otherwise, going to step c; and
c. the MMS Relay/Sever of the sending party transmitting the MM to a UA of a receiving party via a MMS Relay/Sever of the receiving party, and notifying the billing system that this MM transmission is to be paid by the third party, the billing system then deducting relevant cost from the account of the third party.

The method may further comprise: the MMS Relay/Sever of the sending party returning a submit response message containing the third party paying information to the sending party before the step of the MMS Relay/Sever of the sending party transmitting the MM to the UA of the receiving party via the MMS Relay/Sever of the receiving party in step c.

The method may further comprise the following step after step c: after receiving a delivery report request message returned by the MMS Relay/Sever of the receiving party, the MMS Relay/Sever of the sending party returning a delivery report request message containing the third party paying information to the sending party.

The third party paying information contains at least the information indicating that this MM transmission is free.

The third party paying information further contains identification information of the third party.

The third party paying information further contains extra description information of the third party.

The submit request message in step b may further contain the third party paying information;
before the MMS Relay/Sever judges whether this MM transmission from the sending party is to be paid by the third party according to the rules, the method further comprising: the MMS Relay/Sever of the sending party judging whether the third party paying information in the submit request message is correct according to the third party paying rules and information acquired by itself, if so, executing the step of judging whether this MM transmission from the sending party is to be paid by the third party; otherwise, setting the third party paying information in the submit request message as that acquired by the server itself, and executing the step of judging whether this MM transmission from the sending party is to be paid by the third party.

The submit request message in step b may further contain the third party paying information;
before the MMS Relay/Sever judges whether this MM transmission from the sending party is to be paid by the third party according to the rules, the method further comprising: the MMS Relay/Sever of the sending party judging whether the third party paying information in the submit request message is correct according to the third party paying rules and information acquired by itself, if so, executing the step of judging whether this MM transmission from the sending party is to be paid by the third party; otherwise, returning a message indicating the third party paying information in the submit request message is incorrect to the sending party, then ending the procedure of the third party paying for the MM transmission from the sending party.

The paying type of the third party in step a is a paying type agreed between the third party and the service provider, or between the third party and the sending party, or between the third party and a VASP.

The third party paying rules and information are stored in a HLR of the service provider network; or in a HSS of the service provider network; or in a MMS User Database of the service provider network; or in a VASP, or in a mobile terminal.

The sending party can be either a mobile terminal or a VASP; and the receiving party can be either a mobile terminal or a VASP.

With the method proposed by this invention, by way of the paying contract between the third party and the service provider or the sending party or VASP, the service provider network is able to notify the sending party with the third party paying information that the MM is free when the sending party sends the receiving party an MM paid by the third party, at the same time able to let the sending party know the party paying for the MM and the specific description information of the paying party.

### Brief Description of the Drawings

Figure 1 is a schematic diagram illustrating the network architecture for MMS according to the prior art.
Figure 2 is a flowchart of sending and receiving an MM paid by the third party according to the present invention.
Figure 3 is a timing diagram of the message flow of the third party paying for the MM transmission from the sending party according to the present invention.

### Detailed Description of the Invention

The present invention will be described in detail hereinafter with reference to the accompanying drawings and a specific embodiment.

Based on the network architecture provided by TS23.140 standard in 3GPP, the method of the present invention adds, in the original sending and receiving messages of the procedures for sending and receiving an MM, the relevant information of the third party paying for the MM transmission.

In the present invention, to pay for MM transmission from the sending party, the third party can sign a paying contract with the service provider or the sending party or a VASP, and make sure that there is an account of the third party in a billing system of the service provider. The sending party can be either a mobile terminal or a VASP. If it is a mobile terminal, the third party can sign a third party paying contract with the service provider or the mobile terminal user. In this case, the service provider network can notify the sending party that the MM is free and let the sending party know who is the party paying for the MM by means of identification information of the third party; furthermore, extra description information of the third party can be sent to the sending party. Depending on storing situations, the information received by the sending party can be sent directly by the mobile terminal, or sent through the service provider network.

If the sending party is a VASP, the third party can sign a third-party paying contract with the service provider or the VASP. If the contract is singed with the service provider, the situation is the same as above. If the contract is signed with the VASP, when sending an MM to the receiving party through the service provider's network, the VASP can notify the sending party that the MM is free and who pays for the MM by means of identification information of the third party; furthermore, the VASP can send extra description information of the third party to the sending party. Depending on the storing situation, the information obtained by the sending party can be directly sent from the VASP or via the service provider's network.

The rules of the third party paying for the sending party are defined by the third party paying contract while the relevant information is brought forward or deduced by the third party paying contract according to the rules. Since there are multiple possible situations under which the third party pays for the sending party, there are multiple corresponding rules in the third party paying contract between the third party and the service provider. Depending on different paying situations, the rules and relevant information of the third party paying for the sending party may be the rules and relevant information for the third party to pay for all MM transmissions from the sending party, or those for the third party to pay for the MM transmissions in a specific time period, with information about the specific period in the relevant information. The above are just two examples of the rules, which are obviously not confined thereto and may be either the combination of the above two or other rules. Furthermore, if it is needed to notify the sending party that the MM is to be paid by the third party, the information about the third party paying for the sending party stored in the service provider or VASP needs to include identification and description information of the third party.

The procedure by which the third party pays for the MM transmission from the sending party will be described as follows.

If the sending party is a mobile terminal, the procedure is the same for the situation that the third party signs the third party paying contract with the service provider and the situation that the third party does so with the mobile terminal as the sending party. Specifically speaking, when the third party signs the third party paying contract with the service provider or the mobile terminal, it must be guaranteed that there is an account of the third party in the billing system of the service provider. The service provider may store the rules and relevant information of the third party paying for the sending party in the MMS User Database or HLR/HSS, or in the mobile terminal. If rules and relevant information of the third party paying for the sending party are stored in the mobile terminal, the service provider network may not store the rules and information while the MMS Relay/Server where the sending party is located can acquire the rules and information of the third party paying for the sending party directly through a submit request message sent by the mobile terminal. That is to say, the MMS Relay/Server where the sending party is located can acquire the rules and information of the third party paying for the sending party either from the MMS User Database or HLR/HSS, or from the mobile terminal.

If the sending party is a VASP, the third party can sign the third party paying contract with the service provider or the VASP. If the third party paying contract is signed between the third party and the service provider, the procedure is similar to that corresponding to the situation where the sending party is a mobile terminal and the third party signs the third party paying contract with the service provider, with the only required modification being changing MM1 corresponding to the sending party in the former procedure into MM7 so as to send and receive messages through MM7. If the third party paying contract is signed between the third party and the VASP, the VASP will store the third party paying rules and relevant information. In this case, it must be guaranteed as well that there is an account of the third party in billing system of the service provider, but the third party paying rules and relevant information may or may not be stored in the MMS user Database or HLR/HSS. If the rules and relevant information are stored in MMS user Database or HLR/HSS, the processing method is completely the same as that corresponding to the situation when the third party signs the third party paying contract with the service provider or the mobile terminal, and the sending party is notified of the relevant information about the paying third party by the service provider network. In contrast, if the third party paying rules and relevant information are not stored in the MMS user Database or HLR/HSS, the VASP, when sending an MM to the receiving party as the sending party, will judge on the basis of the third party paying rules and relevant information stored therein whether the MM sent by the corresponding sending party should be paid for by the third party, if so, the VASP needs to add the third party paying information to this message when sending the MM7_Submit_REQ (a request message submitted via MM7) to the MMS Relay/Server where the VASP is located. The rest of the procedure is the same as that in the previous situation.

The receiving party can be a mobile terminal or a VASP, where the procedures of sending and receiving an MM are similar with the only difference that the mobile terminal and MMS Relay/Server send and receive messages through interface MM1 while VASP and MMS Relay/Server send and receive messages through interface MM7. A mobile phone will be taken as an example of the mobile terminal hereinafter.

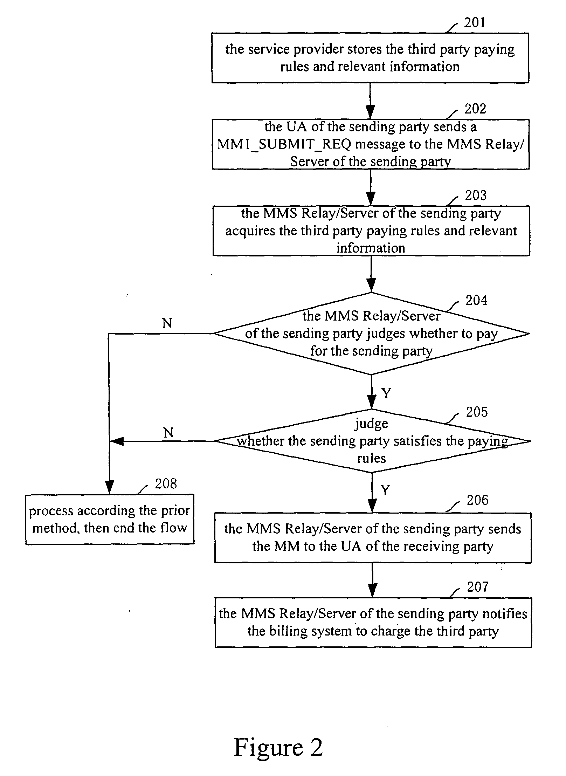

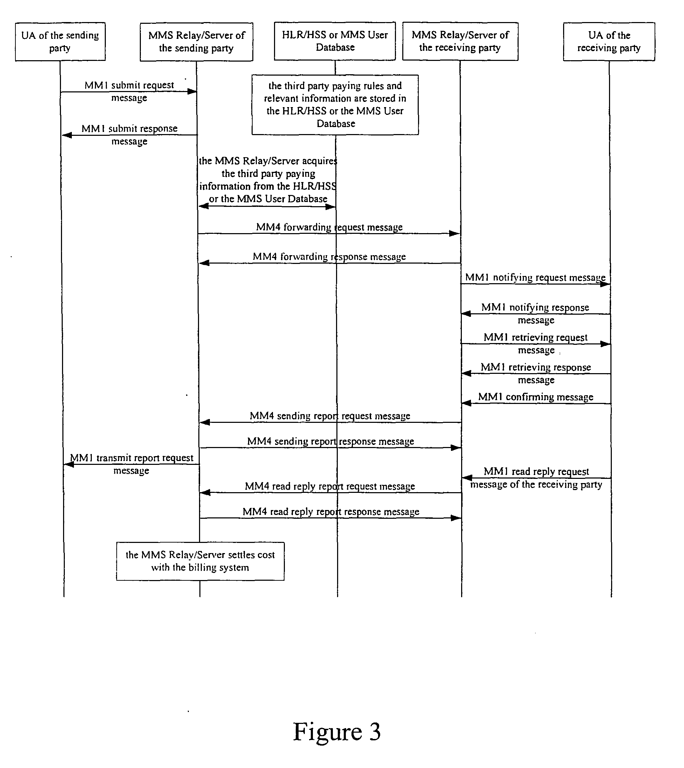

Figure 2 shows a flowchart of sending and receiving an MM with the third party paying contract signed between the third party and the service provider, where both the sending party and the receiving party are mobile phones and there are no third party paying rules and relevant information stored in the sending mobile phone. Figure 3 shows a corresponding timing of the message flow of sending and receiving an MM with the third party paying contract signed between the third party and the service provider, where both the sending party and the receiving party are mobile phones.

With reference to Figure 2, the specific steps in the procedure of sending and receiving an MM with the third party paying contract signed between the third party and the service provider are as follows:
Step 201: according to the third party paying contract, a service provider stores the third party paying rules and relevant information in a MMS User Database or a HLR/HSS.
Step 202: a UA of the sending party submits or uploads the MM to be transmitted to a MMS Relay/Server of the sending party by means of a submit request message of an MM1 interface (MM1_SUBMIT_REQ).
Step 203: after receiving the MM1_SUBMIT_REQ message, the MMS Relay/Server of the sending party acquires the third party paying rules and relevant information from the HLR/HSS or the MMS User Database.
   If the third party paying rules and information are stored in the HLR/HSS, they can be obtained through the MM5 interface; if stored in the MMS User Database, they can be obtained through the MM6 interface.
Steps 204~205: according to the obtained third party paying rules and information, first, the MMS Relay/Server of the sending party judges whether the third party should pay for the sending party of this MM, if not, go to step 208; if so, judge further whether this sending party satisfies the paying rule specified by the third party, if not, go to step 208, otherwise go to step 206.
Step 206: the MMS Relay/Server of the sending party sends the MM to the receiving party.
   Before sending the MM to the receiving party, the MMS Relay/Server of the sending party can return an MM1 submit response message (MM1_SUBMIT_RES) to notify the sending party that the MM1 message is paid by the third party, and can moreover notify the sending party of who pays for the MM through the third party identification information. At the same time, extra description information of the third party can be sent to the sending party.
Step 207: the MMS Relay/Server of the sending party notifies the billing system to charge the third party for this MM transmission; the billing system deducts relevant cost from the third party's account so as to settle the cost for this MM transmission.
   The MMS Relay/Server of the sending party can also send an MM1 delivery report request message (MM1_Delivery_Report_REQ) to the UA of the sending party so as to notify the UA that the third party has paid for this MM transmission, and can notify the sending party that the MM is paid by the third party by means of the third party identification information, and can further send extra description information of the third party to the sending party.
Step 208: the MM is transmitted according to the prior method for MM transmission, then the procedure of the third party paying for this MM transmission for the sending party will be ended.

The above procedure corresponds to the situation where there is no third party paying rules and relevant information stored in the mobile phone as the sending party. If there are the third party paying rules and relevant information in the mobile phone, the rules and relevant information can be included in the submit request message sent to the MMS Relay/Server of the sending party. The MMS Relay/Server of the sending party will judge whether the third party paying information in the submit request message is correct according to the third party paying rules; if so, whether this MM is to be paid by the third party will be further judged; otherwise, the third party paying information in the submit request message will be set as the acquired third party paying information, or a message indicating the third party paying information is incorrect will be returned to the sending party and then this procedure will be ended. The MMS Relay/Server of the sending party may acquire the third party paying rules from the MMS User Database or the HLR/HSS, or may acquire the same from the submit request message where the above judging process can be omitted.

The method of the present invention, while enabling the third party to pay for the MM transmission from a sending party, can guarantee the notification of the sending party that the MM transmission is free, letting the sending party know who is to pay for the MM and the specific description information of the paying party.

The description above is only a preferred embodiment of the solution proposed by this invention and not to be construed as limits to the protection scope of the invention.

## Claims

1. A method for a third party paying for Multimedia Message (MM) transmission from a sending party, comprising:
a. a Multimedia Message Service (MMS) network setting and storing the third party paying rules and information according to paying type of the third party, and setting an account for the third party in a billing system;
b. a sending party transmitting an MM to a MMS Relay/Sever of the sending party by means of a submit request message, the MMS Relay/Sever of the sending party acquiring the third party paying rules and information and judging whether this MM transmission from the sending party is to be paid by the third party according to the rules, if not, ending the procedure of the third party paying for the MM transmission from the sending party, otherwise, going to step c; and
c. the MMS Relay/Sever of the sending party transmitting the MM to a User Agent (UA) of a receiving party via a MMS Relay/Sever of the receiving party, and notifying the billing system that this MM transmission is to be paid by the third party, the billing system then deducting relevant cost from the account of the third party.

2. A method according to claim 1, further comprising: the MMS Relay/Sever of the sending party returning a submit response message containing the third party paying information to the sending party before the step of the MMS Relay/Sever of the sending party transmitting the MM to the UA of the receiving party via the MMS Relay/Sever of the receiving party in step c.

3. A method according to claim 1, after step c further comprising: after receiving a delivery report request message returned by the MMS Relay/Sever of the receiving party, the MMS Relay/Sever of the sending party returning a delivery report request message containing the third party paying information to the sending party.

4. A method according to claim 2 or claim 3, wherein the third party paying information contains at least the information indicating that this MM transmission is free.

5. A method according to claim 4, wherein the third party paying information further contains identification information of the third party.

6. A method according to claim 5, wherein the third party paying information further contains extra description information of the third party.

7. A method according to claim 1, wherein the submit request message in step b further contains the third party paying information;
before the MMS. Relay/Sever judges whether this MM transmission from the sending party is to be paid by the third party according to the rules, the method further comprising: the MMS Relay/Sever of the sending party judging whether the third party paying information in the submit request message is correct according to the third party paying rules and information acquired by itself, if so, executing the step of judging whether this MM transmission from the sending party is to be paid by the third party; otherwise, setting the third party paying information in the submit request message as that acquired by the server itself, and executing the step of judging whether this MM transmission from the sending party is to be paid by the third party.

8. A method according to claim 1, wherein the submit request message in step b further contains the third party paying information;
before the MMS Relay/Sever judges whether this MM transmission from the sending party is to be paid by the third party according to the rules, the method further comprising: the MMS Relay/Sever of the sending party judging whether the third party paying information in the submit request message is correct according to the third party paying rules and information acquired by itself, if so, executing the step of judging whether this MM transmission from the sending party is to be paid by the third party; otherwise, returning a message indicating the third party paying information in the submit request message is incorrect to the sending party, then ending the procedure of the third party paying for the MM transmission from the sending party.

9. A method according to claim 1, wherein the paying type of the third party in step a is a paying type agreed between the third party and the service provider, or between the third party and the sending party, or between the third party and a Value Added Service Provider (VASP).

10. A method according to claim 1, wherein the third party paying rules and information are stored in a Home Location Register (HLR) of the service provider network; or in a Home Subscriber Server (HSS) of the service provider network; or in a MMS User Database of the service provider network; or in a VASP, or in a mobile terminal.

11. A method according to claim 1, wherein either the sending party or the receiving party can be a mobile terminal or a VASP.
